# EUROPEAN PATENT APPLICATION

(11) **EP 4 539 374 A1**
(43) Date of publication of application: **16.04.2025**
(21) Application number: 24765928.7
(22) Date of filing: 30.08.2024
(51) Int. Cl.: H04L 1/22, H04L 1/00, H04B 7/155, H04L 1/20, H04N 21/436, H04L 1/16, H04W 28/04, H04W 84/12

(54) **ELECTRONIC DEVICE AND DATA TRANSMISSION METHOD THEREOF**

(30) Priority: 30.08.2023 KR 20230114954; 06.12.2023 KR 20230175468
(71) Applicant: Samsung Electronics Co., Ltd., Suwon-si, Gyeonggi-do 16677 (KR)
(72) Inventor: HAN, Yunkyoung, Suwon-si, Gyeonggi-do 16677 (KR)
(74) Representative: Appleyard Lees IP LLP
(86) International application number: PCT/KR2024/013077
(87) International publication number: WO 2025/048556

(57) **Abstract**

An electronic device (100) is disclosed. The electronic device includes a first communication interface (110), a second communication interface (120) configured to communicate with a display device wirelessly, a third communication interface (130) configured to communicate with the display device through an access point (400) which communicates with the display device wirelessly, and at least one processor (150) configured to receive data from an external device (300) through the first communication interface, generate repair packets by encoding source packets which include the data using a forward error correction (FEC) code, transmit first repair packets selected from among the repair packets and the source packets to the display device through the second communication interface, and transmit second repair packets excluding the first repair packets from among the repair packets to the display device through the access point using the third communication interface.

## Description

### [TECHNICAL FIELD]

The disclosure relates to an electronic device transmitting data and a method for transmitting data.

### [Background Art]

With recent developments in electronic technology, display devices such as televisions (TVs) and the like are connected with peripheral devices wirelessly. This reduces the need for wired connections and wires, improving the aesthetics and functionality of the display devices.

Meanwhile, data between a display device and peripheral devices may be transmitted in packet units, and loss of data may occur in units of transmission packets. Packets can be lost due to a variety of causes, such as issues with wired connections (particularly at the connection point), network interfaces, hardware, network congestion, and server issues and the like. Accordingly, if a packet is lost, a receiving end is not able to receive the lost packet nor data included therein. In some cases, if a packet is lost, the packet must be re-transmitted, which causes a delay. Accordingly, in consideration of the loss of data which can occur in the network, there is a need to seek a way for reliably receiving packets at the receiving end.

### [DISCLOSURE]

### [Technical Solution]

There is provided an electronic device that includes a first communication interface, a second communication interface configured to communicate with a display device wirelessly, a third communication interface configured to communicate with the display device through an access point which communicates with the display device wirelessly, and at least one processor. The at least one processor is configured to receive data from an external device through the first communication interface. The at least one processor is configured to generate repair packets by encoding source packets which include the data using a forward error correction (FEC) code. The at least one processor is configured to transmit first repair packets selected from among the repair packets and the source packets to the display device through the second communication interface. The at least one processor is configured to transmit second repair packets excluding the first repair packets from among the repair packets to the display device through the access point using the third communication interface.

**In** addition, the at least one processor may be configured to transmit, using the second communication interface, the source packets and the first repair packets to the display device through a first path which is a direct communication path between the electronic device and the display device that does not go through the access point, and transmit, using the third communication interface, the second repair packets to the display device through a second path which is a communication path between the electronic device and the display device which goes through the access point.

**In** addition, the at least one processor may be configured to reduce, based on the display device being identified as having restored the source packets using packets received through the first path, a number of the first repair packets being transmitted to the display device through the first path.

In addition, the at least one processor may be configured to lower a code rate of the FEC code based on the display device being identified as not having been able to restore the source packets using packets received through the first path and the second path.

In addition, the at least one processor may be configured to receive information on a number of packets received by the display device through the first path and the number of packets received by the display device through the second path from the display device through the second communication interface, and identify whether the display device has restored the source packets based on the received information.

In addition, the at least one processor may be configured to identify, based on a number of packets received by the display device through the first path being greater than a number of source packets, that the display device has restored the source packets using packets received through the first path.

In addition, the at least one processor may be configured to identify, based on a sum total of a number of packets received by the display device through the first path and a number of packets received by the display device through the second path being less than or equal to the number of source packets, that the display device has not been able to restore the source packets using packets received through the first path and the second path.

In addition, the at least one processor may be configured to identify, based on the display device being identified as not having been able to restore the source packets using packets received through the first path and the second path, a network state of the first path based on a number of packets received by the display device through the first path, and identify a network state of the second path based on a number of packets received by the display device through the second path, and transmit, based on identifying that the network state of the first path is not good and the network state of the second path is good, the second repair packets to the display device through the second communication interface, and transmit the source packets and the first repair packets to the display device through the access point using the third communication interface.

In addition, the external device may be an electronic device or a server capable of transmitting image and audio data.

There is provided a method for transmitting data of an electronic device that includes receiving data from an external device, generating repair packets by encoding source packets which include the data using a forward error correction (FEC) code, directly transmitting first repair packets selected from among the repair packets and the source packets to the display device, and transmitting second repair packets excluding the first repair packets from among the repair packets to the display device through an access point.

In addition, the directly transmitting comprises transmitting the source packets and the first repair packets to the display device through a first path which is a direct communication path between the electronic device and the display device that does not pass the access point, and the transmitting through the access point comprises transmitting the second repair packets to the display device through a second path which is a communication path between the electronic device and the display device which goes through the access point.

In addition, the method further comprises reducing, based on the display device being identified as having restored the source packets using packets received through the first path, a number of the first repair packets being transmitted to the display device through the first path.

In addition, the method further comprises lowering a code rate of the FEC code based on the display device being identified as not having been able to restore the source packets using packets received through the first path and the second path.

In addition, the method further comprises receiving information on a number of packets received by the display device through the first path and a number of packets received by the display device through the second path from the display device and identifying whether the display device has restored the source packets based on the received information.

In addition, the identifying comprises identifying, based on a number of packets received by the display device through the first path being greater than a number of source packets, that the display device has restored the source packets using packets received through the first path.

There is provided a non-transitory computer-readable medium configured to store computer instructions for an electronic device to perform an operation when executed by at least one processor of the electronic device, the operation including receiving data from an external device, generating repair packets by encoding source packets which include the data using a forward error correction (FEC) code, directly transmitting first repair packets selected from among the repair packets and the source packets to a display device, and transmitting second repair packets excluding the first repair packets from among the repair packets to the display device through an access point.

### [DESCRIPTION OF DRAWINGS]

FIG. 1 is a diagram illustrating schematically an electronic device transmitting data according to an embodiment of the disclosure;
FIG. 2 is a block diagram illustrating a configuration of the electronic device of Fig. 1;
FIG. 3 is a flowchart illustrating an operation of the electronic device of Fig. 1 transmitting data to a display device;
FIG. 4 is a diagram illustrating an operation of the electronic device of Fig. 1;
FIG. 5 is a block diagram illustrating a configuration of a display device;
FIG. 6 is a flowchart illustrating an operation of the display device of Fig. 5 restoring source packets using packets received from an electronic device;
FIG. 7 is a diagram illustrating an operation of the display device of Fig. 5; and
FIG. 8 is a flowchart illustrating an operation performed by the electronic device of Fig. 1 using information received from the display device of Fig. 5.

### [MODE FOR INVENTION]

Various embodiments of the disclosure and terms used herein are not intended to limit the technical features described in the disclosure to specific embodiments, and it is to be understood as including various modifications, equivalents, or alternatives of relevant embodiments.

With respect to the description of the drawings, like reference numerals may be used to indicate like or associated elements.

A singular form of a noun corresponding to an item may include one or a plurality of items, unless the associated context clearly specifies otherwise.

In the disclosure, phrases such as "A or B", "at least one of A and B", "at least one of A or B", "A, B, or C", "at least one of A, B, and C", and "at least one of A, B, or C" may respectively include any one or all possible combinations of the items listed together with the relevant phrase from among the phrases. For example, "A or B", "at least one of A and B", or "at least one of A or B" may refer to all cases including (1) at least one A, (2) at least one B, or (3) both of at least one A and at least one B.

Terms such as "1st", "2nd", or "first" or "second" may be used to simply distinguish a relevant element from another relevant element, and not limit the relevant elements in other aspects (e.g., importance or order).

When a certain (e.g., first) element is indicated as being "coupled with/to" or "connected to" another (e.g., second) element, together with or without terms such as "operatively" or "communicatively", it may be understood as the certain element being coupled with/to the another element directly (e.g., via wire), wirelessly, or through a third element.

Terms such as "have" or "include" are used herein to designate a presence of a characteristic, number, step, operation, element, component, or a combination thereof, and not to preclude a presence or a possibility of adding one or more of other characteristics, numbers, steps, operations, elements, components or a combination thereof.

When a certain element is described as "coupled", "combined", "supported", or "contacted" with another element, the above may include not only the elements being directly coupled, combined, supported, or contacted, but also being indirectly coupled, combined, supported, or contacted through the third element.

When the certain element is described as positioned "on" another element, the above may include not only the certain element being contacted to another element, but also other element being present between two elements.

The term "and/or" may include a combination of a plurality of related elements described or any element from among the plurality of related elements described.

In a certain circumstance, the expression "a device configured to..." may mean something that the device "may perform..." together with another device or components. For example, the phrase "a processor configured to (or set up to) perform A, B, or C" may mean a dedicated processor for performing a relevant operation (e.g., embedded processor), or a generic-purpose processor (e.g., a central processing unit (CPU) or an application processor) capable of performing the relevant operations by executing one or more software programs stored in a memory device.

In the embodiments, the term "module" or "part" perform at least one function or operation, and may be implemented with a hardware or software, or implemented with a combination of hardware and software. In addition, a plurality of "modules" or a plurality of "parts," except for a "module" or a "part" which needs to be implemented to a specific hardware, may be integrated in at least one module and implemented in at least one processor (not shown).

The various elements and areas of the drawings have been schematically illustrated. Accordingly, the technical spirit of the disclosure is not limited by relative sizes and distances illustrated in the accompanied drawings.

Embodiments of the disclosure will be described in greater detail below with reference to the accompanied drawings.

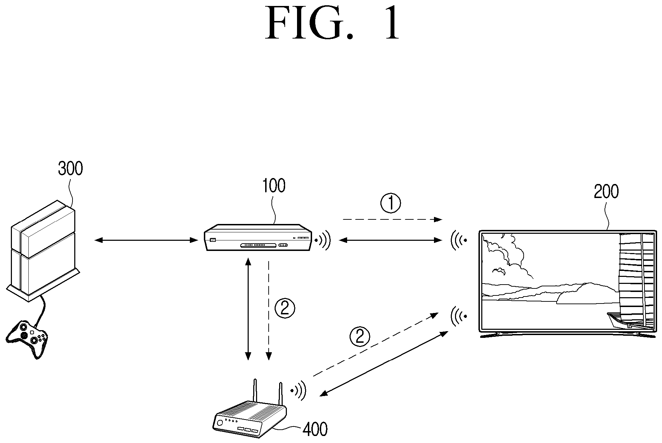

FIG. 1 is a diagram illustrating schematically an electronic device transmitting data according to an embodiment of the disclosure.

An electronic device 100 may be implemented as an electronic device of a type and form connectable with a display device 200, an external device 300, and an access point (AP) 400. For example, the electronic device 100 may be a one connect (OC) box, a data transmitter, or a wireless transmitter, but is not limited thereto.

The electronic device 100 may receive data from the external device 300. Data may include image and audio data (e.g., audio-visual, A/V, data, video data, etc.).

The external device 300 may connect with the electronic device 100, and may be implemented as an electronic device of a type and form which can transmit image and audio data. For example, the external device 300 may be implemented as an electronic device such as a console gaming device, a Blu-ray disc player, a set top box, a smart phone, a tablet personal computer (PC), or a laptop PC, or implemented as a server that provides gaming services, but is not limited thereto.

The electronic device 100 may transmit source packets which include data received from the external device 300 to the display device 200.

For example, the electronic device 100 may generate packets by packetizing data. These generated packets may be referred to as "source packets". The electronic device 100 may generate repair packets by encoding the source packets. Further, the electronic device 100 may transmit the source packets and the repair packets to the display device 200.

In an embodiment, the electronic device 100 may divide the set of repair packets into a first portion of the repair packets and a second portion of the repair packets to transmit them to the display device 200. For example, the electronic device 100 may divide the set of repair packets into two portions, transmit a portion of the repair packets to the display device 200 through a first path, and transmit the remaining repair packets to the display device 200 through a second path. The path may be referred to as a communication path, a channel, and a network, but is not limited thereto.

The first path may be a direct communication path (e.g., ① in FIG. 1) between the electronic device 100 and the display device 200, i.e., a path which does not go through an access point 400.

For example, the electronic device 100 may be wirelessly connected with the display device 200 directly without going through the access point 400.

The first path may be referred to as a main path, a normal path, and a primary path, but is not limited thereto.

The second path may be a communication path (e.g., ② in FIG. 1) between the electronic device 100 and the display device 200 that goes through the access point 400.

For example, the electronic device 100 may communicate with the display device 200 through the access point 400. According to an example, the access point 400 may be connected with the electronic device 100 via wired and/or wireless means, and connected with the display device 200 wirelessly. In this case, the wired communication may include a wired network communication such as, for example, and without limitation, Ethernet, a high-definition multimedia interface (HDMI), a universal serial bus (USB), a USB-C type, a display port (DP), or the like. However, the wired communication is not limited thereto, and wired communications are those that can perform data communication using cables. The wireless communication may include a wireless network communication such as, for example, and without limitation, Wi-Fi, Wi-Fi Direct, Bluetooth, Zigbee, or the like. However, the wireless communication is not limited thereto, and wireless communications are those that can perform data communication without using cables. For example, by transmitting and receiving radio waves.

The second path may be referred to as a sub path, an additional path, and a secondary path, but is not limited thereto.

The display device 200 may receive source packets and repair packets from the electronic device 100, and restore the source packets using the repair packets. Further, the display device 200 may output an image on a screen of the display device 200 using image data included in the packets, and output an audio signal through a speaker of the display device 200 using audio data included in the packets. For example, the display device 200 may be connected to the electronic device 100, and may be an electronic devices of a type and form which can receive image and audio data and output the same. For example, the display device 200 may be an electronic device such as a TV, a monitor, or a projector, but is not limited thereto.

In an embodiment, the display device 200 may restore source packets using the repair packets received through the first path, or restore the source packets using the repair packets received through the first path and the second path.

If some or all packets are lost in the network, the data included in the lost packet is not received, i.e., the display device 200 is unable to receive the lost packet. Therefore, a deterioration in the quality of the image and audio output by the display device 200 may occur. According to the disclosure, the electronic device 100 may generate repair packets using an application layer forward error correction (AL-FEC) method, and transmit the repair packets to the display device 200 to reduce the impact of such a loss of data. At this time, the electronic device 100 may divide the set of repair packets and transmit the repair packets to the display device 200 using a plurality of paths. Accordingly, the display device 200 may restore the source packets using the repair packets received through the second path even if the packets are lost on the first path.

In this way, the quality of service (QoS) of data transmission (e.g., for multimedia content) is improved by reducing or removing the need for packet retransmission, e.g., reducing or removing the need for an automatic repeat request (ARQ) which requests retransmission of the packets . This means that the delay associated with such retransmission is also reduced or removed. In addition, the deterioration in image and audio quality occurs when restoration of the source packets fails is prevented.

The specific operations of the electronic device 100 transmitting the repair packets to the display device 200, and the display device 200 restoring the source packets using the received packets, will be described in greater detail below.

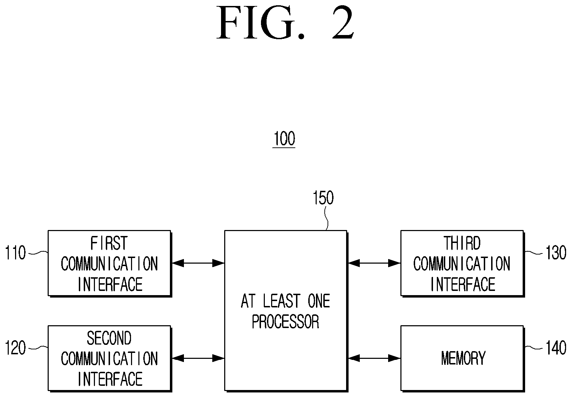

FIG. 2 is a block diagram illustrating a configuration of an electronic device according to an embodiment of the disclosure.

Referring to FIG. 2, the electronic device 100 may include a first communication interface 110, a second communication interface 120, a third communication interface 130, a memory 140, and at least one processor 150. However, the configurations as described are merely examples, and some components may be omitted from the configurations as described, or new components may be added to the configurations as described.

The first communication interface 110 may perform communication with the external device 300. This may be carried out under the control of the at least one processor 150. For example, the electronic device 100 may be connected with the external device 300 using the first communication interface 110.

The first communication interface 110 may include a communication module. The communication module may include communication circuitry which can perform data communication between the electronic device 100 and the external device 300 using wired or wireless communication. The wired communication may include a wired network communication such as HDMI, USB, USB-C type, DP, or Ethernet. However, the wired communication above is not limited thereto, and includes various wired communications that can perform data communication using cables.

Additionally or alternatively, the first communication interface 110 may connect the electronic device 100 to a wide area network (WAN) to which the external device 300 (e.g., server) is connected. The electronic device 100 may be connected to the external device 300 through the wide area network.

The second communication interface 120 may perform communication with the display device 200 wirelessly. This may be carried out under the control of the at least one processor 150. For example, the electronic device 100 may be directly connected with the display device 200 wirelessly using the second communication interface 120.

For example, the second communication interface 120 may include a communication module. The communication module may include communication circuitry which can perform data communication between the electronic device 100 and the display device 200 using wireless communication. The wireless communication may include Wi-Fi Direct. However, the wireless communication above is not limited thereto, and includes various wireless communications, such as those that can perform data communication by transmitting and receiving radio waves.

The third communication interface 130 may communicate with the display device 200 through the access point 400. This may be carried out under the control of the at least one processor 150. The access point 400 may communicate with the display device 200 wirelessly. For example, the electronic device 100 may be connected with the display device 200 through the access point 400 using the third communication interface 120.

The third communication interface 130 may include a communication module. The communication module may include communication circuitry which is capable of performing data communication between the electronic device 100 and the access point 400 using wired communication or wireless communication. The wired communication may include wired network communications such as HDMI, USB, USB-C type, DP, or Ethernet. However, the wired communication above is not limited thereto, and includes various wired communications that can perform data communication using cables. In addition, the wireless communication may include a wireless network communication such as, for example, and without limitation, Wi-Fi, Bluetooth, Zigbee, or the like. However, the wireless communication above is not limited thereto, and includes various wireless communications, such as those that can perform data communication by transmitting and receiving radio waves.

The memory 140 store instructions, data structures, and program codes readable by the at least one processor 150. Operations performed by the at least one processor 150 may be implemented by executing the instructions or codes of programs stored in the memory 140.

The memory 140 may include a flash memory type, a hard disk type, a multimedia card micro type, and a memory of a card type (e.g., SD or XD memory, etc.), a non-volatile memory including at least one from among a read-only memory (ROM), an electrically erasable programmable read-only memory (EEPROM), a programmable read-only memory (PROM), a magnetic memory, a magnetic disk, and an optical disk, and a volatile memory such as a random access memory (RAM) or a static random access memory (SRAM).

The memory 140 may store at least one instruction and/or program for the electronic device 100 to operate according to the disclosure.

The at least one processor 150 may control the overall operations of the electronic device 100. For example, the at least one processor 150 may be operatively connected with the first communication interface 110, the second communication interface 120, the third communication interface 130, and the memory 140, and control the electronic device 100. In addition, the at least one processor 150 may control an operation of the electronic device 100 according to the disclosure by executing the at least one instruction stored in the memory 140. The at least one processor 150 may be one or a plurality of processors.

The at least one processor 150 may include at least one processor, such as a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 150 may control one or more other elements or components of the electronic device 100, and may perform an operation associated with communication or data processing.

For example, the at least one processor 150 may perform, by executing at least one instruction stored in the memory 140, a method according to an embodiment of the disclosure.

When a method according to an embodiment of the disclosure includes a plurality of operations, the plurality of operations may be performed by one processor, or performed by a plurality of processors. For example, when a first operation, a second operation, and a third operation are performed by a method according to an embodiment, the first operation, the second operation, and the third operation may all be performed by a first processor, or the first operation and the second operation may be performed by the first processor (e.g., a generic-purpose processor) and the third operation may be performed by a second processor (e.g., a purpose-specific processor, such as an artificial intelligence dedicated processor).

The at least one processor 150 may be a single core processor that includes one core, or as at least one multicore processor that includes a plurality of cores (e.g., a homogeneous multicore or a heterogeneous multicore processor). If the at least one processor 150 is implemented as a multicore processor, each of the plurality of cores included in the multicore processor may include a memory inside the processor such as a cache memory and an on-chip memory, and a common cache shared by the plurality of cores may be included in the multicore processor. **In** addition, each of the plurality of cores (or a portion from among the plurality of cores) included in the multicore processor may independently read and perform a program command for implementing a method according to an embodiment of the disclosure, or read and perform a program command for implementing a method according to an embodiment of the disclosure due to a whole (or a portion) of the plurality of cores being interconnected.

When a method according an embodiment of the disclosure includes a plurality of operations, the plurality of operations may be performed by one core from among the plurality of cores or performed by a plurality of cores included in the multicore processor. For example, when a first operation, a second operation, and a third operation are performed by a method according to an embodiment, the first operation, the second operation, and the third operation may all be performed by a first core included in the multicore processor, or the first operation and the second operation may be performed by the first core included in the multicore processor and the third operation may be performed by a second core included in the multicore processor.

In the embodiments of the disclosure, the processor may refer to a system on chip (SoC), a single core processor, or a multicore processor in which the at least one processor and other electronic components are integrated or a core included in the single core processor or the multicore processor, and the core herein may be implemented as the CPU, the GPU, the APU, the MIC, the DSP, the NPU, the hardware accelerator, the machine learning accelerator, the machine learning accelerator or the like, but the embodiments of the disclosure are not limited thereto.

For convenience of description below, the at least one processor 150 may be described as the processor 150.

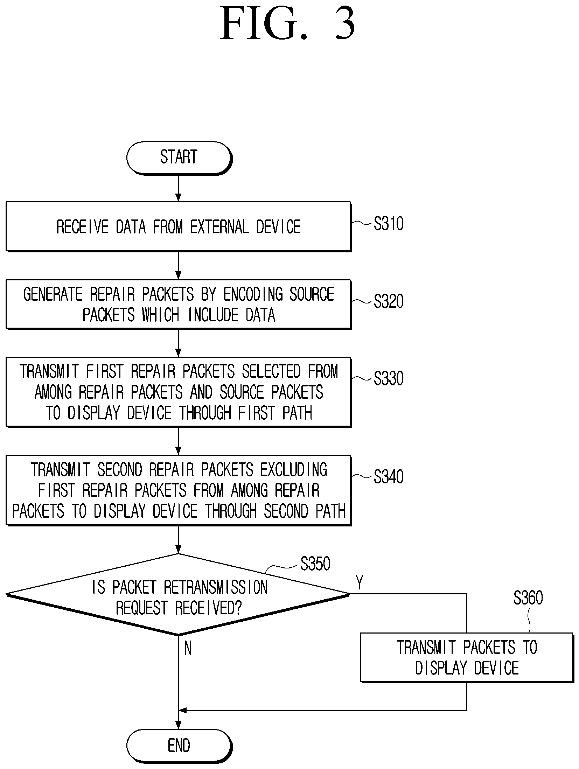

FIG. 3 is a flowchart illustrating an operation of an electronic device transmitting data to a display device according to an embodiment of the disclosure.

In step S310, the processor 150 may receive data from the external device 300 through the first communication interface 110. Data may include at least one of image and audio data.

In step S320, the processor 150 may generate repair packets by encoding the source packets which include data using a forward error correction (FEC) code.

At this time, the processor 150 may encode the source packets using an AL-FEC method.

The AL-FEC method may be a method of applying packet level FEC in an application layer which is a layer of a protocol stack that sends and receives data for particular applications. The AL-FEC method is used to reduce packet loss due to an error which can occur in the network. In the case of the AL-FEC method, since a transmitting end generates the repair packets by encoding the source packets and transmits the repair packets, the source packets may be restored through decoding at a receiving end even if a portion of the packets is lost in the network.

The FEC code used in the AL-FEC may be a code such as, for example, and without limitation, a Reed Solomon (RS) code, Fountain code, e.g., a Raptor code, and the like. If a number of received packets is greater than a certain number, regardless of whether the packets received from the receiving end are source packets or repair packets, the lost packets may be restored. For example, if the total number of packets received is greater than the number of source packets, the receiving end can restore the source packets by decoding the received packets.

The repair packets may include a parity bit or parity information for loss restoration. The repair packets may be used in restoring the source packets from the receiving end. The repair packets may be referred to as error correcting packets, and the like.

A number of source packets, K, and a code rate, R, are examples of FEC parameters. For example, R=K/n, where n=K+r and r is a number of repair packets. An initial value of the FEC parameters may be preset according to a system requirement setting.

In operation S320, the processor 150 may transmit first repair packets selected from among the repair packets and the source packets to the display device 200 through the second communication interface 120. For example, the processor 150 may transmit, using the second communication interface 120, the source packets and the first repair packets to the display device 200 through a first path between the electronic device 100 and the display device 200 which does not go through the access point. That is, the electronic device 100 may directly transmit the source packets and the first repair packets to the display device 200.

For example, if K number of source packets are encoded, a K/R-K number of repair packets may be generated, where R is a code rate of the FEC code. The processor 150 may randomly select an M number of repair packets from among the K/R-K number of repair packets. M may have a preset value according to the system requirement setting, and may be changed according to whether decoding in the display device 200 is a success. Further, the processor 150 may transmit the K number of source packets and the M number of repair packets to the display device 200 through the second communication interface 120. The electronic device 100 may transmit the K number of source packets and the M number of repair packets to the display device 200 through the first path.

In operation S340, the processor 150 may transmit second repair packets excluding the first repair packets from among the repair packets to the display device 200 through the access point 400 using the third communication interface 130. For example, the processor 150 may transmit, using the third communication interface 130, the second repair packets to the display device 200 through the second path between the electronic device 100 and the display device 200 which goes through the access point 400. That is, the electronic device 100 may transmit the second repair packets to the display device 200 through the access point 400.

Continuing the example above, the processor 150 may transmit the remaining repair packets excluding the M number of repair packets from among the K/R-K number of repair packets to the display device 200 through the third communication interface 130. That is, the number of remaining repair packets is K/R-(K+M). That is, the electronic device 100 may transmit the K/R-(K+M) number of repair packets to the display device 200 through the second path.

In operations S350 and S360, the processor 150 may transmit, based on a packet retransmission request being received from the display device 200 through the second communication interface 120, packets to the display device 200 through the second communication interface 120 in response to the packet retransmission request. In effect, when a packet retransmission request is received from the display device 200 through the second communication interface 120, processor 150 transmits the packets to the display device 200 through the second communication interface 120.

For example, the retransmission request may include a request for retransmission of lost packets, wherein the lost packets may be lost from the source packets and/or the repair packets. That is, the display device 200 may transmit information on a number of packets necessary for restoring the lost packets to the electronic device 100. The processor 150 may select a requested number of packets from among the source packets and/or repair packets based on this received information, and transmit the selected packets to the display device 200 through the second communication interface 120.

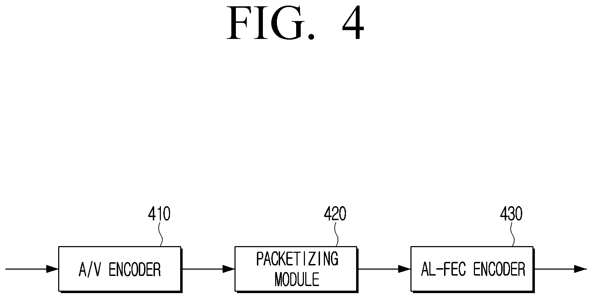

FIG. 4 is a diagram illustrating an operation of an electronic device according to an embodiment of the disclosure.

Referring to FIG. 4, the electronic device 100 may include an A/V encoder 410, a packetizing module 420, and an AL-FEC encoder 430. Elements shown in FIG. 4 may be implemented with hardware controlled by the processor 150, or may be elements implemented by the processor 150 by executing a program or an instruction stored in the memory 140.

The A/V encoder 410 may encode and compress the image and audio data received from the external device 300.

The packetizing module 420 may packetize data compressed by the A/V encoder 410 into packets.

The AL-FEC encoder 430 may generate repair packets by encoding packets generated by the packetizing module 420, i.e., source packets. For example, the AL-FEC encoder 430 may generate the K/R-K number of repair packets by encoding the K number of source packets using the FEC code. R may be the code rate of the FEC code.

The electronic device 100 may select the M number of repair packets from among the K/R-K number of repair packets, and transmit the K number of source packets and the M number of repair packets to the display device 200 through the first path. Further, the electronic device 100 may transmit the remaining repair packets, that is, the K/R-(K+M) number of repair packets to the display device 200 through the second path.

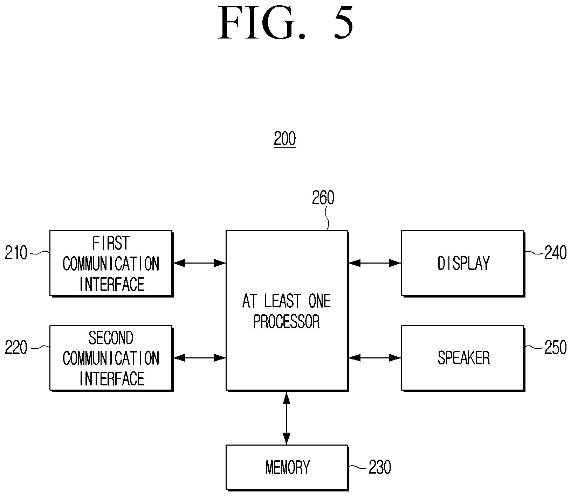

FIG. 5 is a block diagram illustrating a configuration of a display device according to an embodiment of the disclosure.

Referring to FIG. 5, the display device 200 may include a first communication interface 210, a second communication interface 220, a memory 230, a display 240, a speaker 250, and at least one processor 260. However, the configurations as described herein are merely examples, and components may be omitted or added in implementing the disclosure.

The first communication interface 210 may communicate with the electronic device 100 by control of the at least one processor 260 wirelessly. For example, the display device 200 may be wirelessly connected with the electronic device 100 using the first communication interface 210.

For example, the first communication interface 210 may include a communication module. The communication module may include communication circuitry which can perform data communication between the display device 200 and the electronic device 100 using wireless communication. The wireless communication may include Wi-Fi Direct. However, the wireless communication above is not limited thereto.

The second communication interface 220 may communicate with the access point 400 which communicates with the electronic device 100 under the control of the at least one processor 260. For example, the display device 200 may be connected with the electronic device 100 through the access point 400 using the second communication interface 220.

The second communication interface 220 may include a communication module. The communication module may include communication circuitry which can perform data communication between the display device 200 and the access point 400 using wireless communication. The wireless communication may include Wi-Fi, Bluetooth, Zigbee, or the like. However, the wireless communication above is not limited thereto.

The memory 230 may be stored with instructions, data structures, and program codes readable by the at least one processor 260. Operations performed by the at least one processor 260 may be implemented by executing the instructions or codes of programs stored in the memory 230.

The memory 230 may include the flash memory type, the hard disk type, the multimedia card micro type, and the memory of the card type (e.g., SD or XD memory, etc.), the non-volatile memory including at least one from among the ROM, the EEPROM, the PROM, the magnetic memory, the magnetic disk, and the optical disk, and the volatile memory such as the RAM or the SRAM.

The memory 230 may store at least one instruction and/or program for the display device 200 to operate according to the disclosure.

The display 240 may display an image by control of the at least one processor 260. The at least one processor 260 may output an image in a screen of the display 240 by processing image data received from the electronic device 100.

The display 240 may be implemented as a display including self-emissive devices or as a display including non-emissive devices and a backlight. For example, the display 240 may be implemented as displays of various forms such as, for example, and without limitation, a liquid crystal display (LCD), an organic light emitting diode (OLED) display, a light emitting diode (LED) display, a micro LED display, a mini LED display, plasma display panel (PDP), a quantum dot (QD) display, a quantum dot light-emitting diode (QLED) display, or the like. At a front surface of the display 240 for detecting a touch input, a touch sensor may be disposed to detect a touch operation. In addition, the display 240 may be implemented as a flat display, a curved display, a folding and/or a rollable flexible display, and the like.

The speaker 250 may output audio, notification sounds, voice messages, or the like by control of the at least one processor 260. For example, the at least one processor 260 may output an audio signal through the speaker 250 by processing audio data received from the electronic device 100.

The at least one processor 260 may control the overall operations of the display device 200. For example, the at least one processor 260 may be connected with the first communication interface 210, the second communication interface 220, the memory 230, the display 240, and the speaker 250, and may control the display device 200. In addition, the at least one processor 260 may control an operation of the display device 200 according to the disclosure by executing at least one instruction stored in the memory 230. The at least one processor 260 may be one or a plurality of processors.

The at least one processor 260 may include at least one from among a CPU, GPU, APU, MIC, DSP, NPU, a hardware accelerator, or a machine learning accelerator. The at least one processor 260 may control one or more other elements or components of the display device 200, and may perform an operation associated with communication or data processing.

For example, the at least one processor 260 may perform, by executing at least one instruction stored in the memory 230, a method according to an embodiment of the disclosure.

When a method according to an embodiment of the disclosure includes a plurality of operations, the plurality of operations may be performed by one processor, or performed by a plurality of processors. For example, when a first operation, a second operation, and a third operation are performed by a method according to an embodiment, the first operation, the second operation, and the third operation may all be performed by a first processor, or the first operation and the second operation may be performed by the first processor (e.g., a generic-purpose processor) and the third operation may be performed by a second processor (e.g., a purpose-specific processor, such as an artificial intelligence dedicated processor).

The at least one processor 260 may be a single core processor that includes one core, or as at least one multicore processor that includes a plurality of cores (e.g., a homogeneous multicore or a heterogeneous multicore processor). If the at least one processor 260 is implemented as a multicore processor, each of the plurality of cores included in the multicore processor may include a memory inside the processor such as a cache memory and an on-chip memory, and a common cache shared by the plurality of cores may be included in the multicore processor. **In** addition, each of the plurality of cores (or a portion from among the plurality of cores) included in the multicore processor may independently read and perform a program command for implementing a method according to an embodiment of the disclosure, or read and perform a program command for implementing a method according to an embodiment of the disclosure due to a whole (or a portion) of the plurality of cores being interconnected.

When a method according an embodiment of the disclosure includes a plurality of operations, the plurality of operations may be performed by one core from among the plurality of cores or performed by a plurality of cores included in the multicore processor. For example, when a first operation, a second operation, and a third operation are performed by a method according to an embodiment, the first operation, the second operation, and the third operation may all be performed by a first core included in the multicore processor, or the first operation and the second operation may be performed by the first core included in the multicore processor and the third operation may be performed by a second core included in the multicore processor.

In the embodiments of the disclosure, the processor may refer to the system on chip (SoC), the single core processor, or the multicore processor in which the at least one processor and other electronic components are integrated or the core included in the single core processor or the multicore processor, and the core herein may be implemented as the CPU, the GPU, the APU, the MIC, the DSP, the NPU, the hardware accelerator, the machine learning accelerator, or the like, but the embodiments of the disclosure are not limited thereto.

For convenience of description below, the at least one processor 260 may be described as a processor 260.

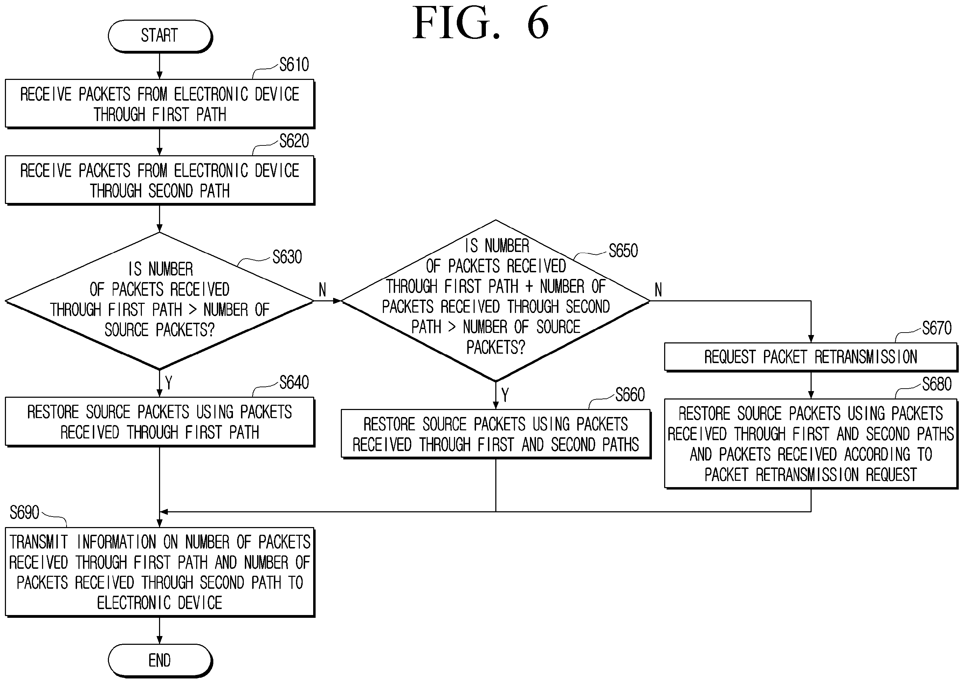

FIG. 6 is a flowchart illustrating an operation of a display device restoring source packets using packets received from an electronic device according to an embodiment of the disclosure.

The display device 200 may receive information on the FEC parameter, as described above, from the electronic device 100. The FEC parameter (e.g., K) may be used in identifying/determining whether the source packets are restorable by the display device 200 using the received packets.

In operation S610, the processor 260 may receive packets from the electronic device 100 through the first communication interface 210. For example, the display device 200 may receive the packets through the first path between the electronic device 100 and the display device 200 which does not go through an access point 400.

In operation S620, the processor 260 may receive the packets from the electronic device 100 through the access point 400 using the second communication interface 220. For example, the display device 200 may receive packets through the second path between the electronic device 100 and the display device 200 which goes through the access point 400.

During transmission, packets may be lost on the first path and/or the second path. If some or all of the packets transmitted from the transmitting end do not reach the receiving end, or if some or all of the packets transmitted from the transmitting end reach the receiving end after a transmission time that exceeds a certain (e.g., pre-set) time, it is identified that packet loss has occurred. The packet loss may occur in packet units. For example, the processor 260 may identify whether packet loss has occurred using an identifier of the received packets. According to an example, the identifier may be a number. The processor 260 may identify, based on numbers of the packets which are received in series not being sequential, that packet loss has occurred.

As described above, the electronic device 100 may generate the K/R-K number of repair packets by encoding the K number of source packets, transmit the K number of source packets and the M number of repair packets to the display device 200 through the first path, and transmit the K/R-(K+M) number of repair packets to the display device 200 through the second path.

If a packet loss rate of the first path is p, a number of packets received in the display device 200 through the first path is N1, wherein N1 = (K+M)(1-p). If a packet loss rate of the second path is q, a number of packets received in the display device 200 through the second path is N2, wherein N2 = (K/R-(K+M))(1-q).

The processor 260 may identify whether the source packets are restorable using the packets (e.g., the number of packets) received from the electronic device 100.

The restoring the source packets may be substituted with expressions such as decoding success, and the not restoring the source packets may be substituted with expression such as decoding failure.

Whether the source packets are restorable may be determined based on the number of packets received in the display device 200 and the number of source packets. **In** this case, the packets received in the display device 200 may include packets received in the display device 200 through the first path or packets received in the display device 200 through the first path and the second path. For example, if the number of packets received through the first path is greater than the number of source packets, the source packets may be restored by decoding the received packets. For example, if the number of packets received through the first path and the second path is greater than the number of source packets, the source packets may be restored by decoding the received packets.

The processor 260 may identify whether the source packets are restorable using the packets received through the first path.

For example, the processor 260 may identify, based on the number of packets received through the first path being greater than the number of source packets (e.g., N1 > K), that the source packets are restorable using the packets received through the first path, i.e., using only the packets received through the first path and not the packets received through the second path.

In operations S630 and S640, the display device 200 may restore, based on the number of packets received through the first path being greater than the number of source packets (S630-Y), the source packets by decoding the packets received through the first path using the FEC code (S640).

The processor 260 may identify, based on the number of packets received through the first path being less than or equal to the number of source packets, that the source packets are not restorable by using the packets received through the first path, i.e., using only the packets received through the first path and not the packets received through the second path. In this case, the processor 260 may identify whether the source packets are restorable by additionally using the packets received through the second path, i.e., using the packets received through the first path and the packets received through the second path.

For example, the processor 260 may identify, based on the total number of packets received through the first path and the second path being greater than the number of the source packets (e.g., N1+N2 > K), that the source packets are restorable using the packets received through the first path and the second path.

In operations S630, S650, and S660, the display device 200 may identify, based on the number of packets received through the first path being less than or equal to the number of source packets (S630-N), whether a sum total of the number of packets received through the first path and the number of packets received through the second path is greater than the number of source packets. The display device 200 may restore the source packets, if the sum total of the number of packets received through the first path and the number of packets received through the second path is greater than the number of source packets (S650-N). The display device 200 may restore the source packets by decoding the packets received through the first path and the packets received through the second path using the FEC code (S660).

The processor 260 may identify, based on the total number of packets received through the first path and the second path being less than or equal to the number of source packets (e.g., N1+N2≤K), that the source packets are not restorable. This is because if a large number of packets are lost in the network, the source packets cannot be restored. If this is the case (i.e., if N1+N2≤K), the processor 260 may transmit a packet retransmission request to the electronic device 100 through the first communication interface 210.

To transmit the packet retransmission request, the processor 260 may identify the number of packets necessary for restoring the lost packets, and transmit information on the identified number to the electronic device 100. For example, the number of packets necessary for restoring the lost packets may be β, wherein β = K-(N1+N2)+x. Here, K may be the number of source packets, N1 may be the number of packets received by the display device 200 through the first path, N2 may be the number of packets received by the display device 200 through the second path, and x may be a natural number. With respect to x, if more than K packets are received using a sub-optimal ALFEC code, it may mean that the source packet can be decoded (e.g. N1+N2>K).

When these requested packets are received through the second communication interface 210, the processor 260 may restore the source packets by using the received requested packets.

**In** operations S650, S670, and S680, if the sum total of the number of packets received through the first path and the number of packets received through the second path is less than or equal to the number of source packets (S650-N), the display device 200 may transmit the packet retransmission request to the electronic device 100 (S670). Then, when the packets are received according to the packet transmission request, the display device 200 may restore the source packets by decoding the first packets received (i.e., packets received through the first path and the second path) and the second packets received according to the packet transmission request (i.e., the received requested packets) using the FEC code (S680).

Meanwhile, in the above-described example, the requested packets are transmitted through the first path, but this disclosure is not limited thereto. For example, the electronic device 100 may transmit the requested packets to the display device 200 through the second path.

**In** operation S690, the processor 260 may transmit information on the number of packets received through the first path and the number of packets received through the second path to the electronic device 100 through the first communication interface 210 (S690). For example, the display device 200 may transmit the number of packets received through the first path (e.g., N1) and the number of packets received through the second path (e.g., N2) to the electronic device 100.

Meanwhile, in the above-described example, although information on the number of packets received by the display device 200 is described as being transmitted to the electronic device 100 through the first path, the above is not limited thereto. For example, the display 200 may transmit information on the number of received packets to the electronic device 100 through the second path.

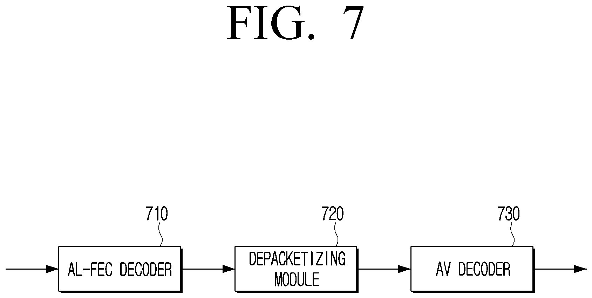

FIG. 7 is a diagram illustrating an operation of a display device according to an embodiment of the disclosure.

Referring to FIG. 7, the display device 200 may include an AL-FEC decoder 710, a depacketizing module 720, and an AV decoder 730. Elements shown in FIG. 7 may be implemented as hardware controlled by the processor 260, or may be configurations implemented by the processor 260 executing programs or instructions stored in the memory 230.

The AL-FEC decoder 710 may restore source packets by decoding the packets received from the electronic device 100 using the FEC code. The received packets may include packets received through the first path, packets received through the first and second paths, or packets received through the first and second paths and packets received according to the packet retransmission request (i.e., requested packets).

The depacketizing module 720 may obtain compressed data by depacketizing the source packets.

The AV decoder 730 may decompress the compressed data by decoding the compressed data, to obtain the data.

Data may include image and audio data. The display device 200 may output an image on a screen of the display 240 using image data, and output an audio signal through the speaker 250 using audio data.

**In** operation S690 in FIG. 6, the display device 200 may transmit information on the number of packets received through the first path and the number of packets received through the second path to the electronic device 100. The electronic device 100 may adjust the number of repair packets transmitted to the display device 200 through the first path using this information received from the display device 200, or adjust the code rate of the FEC code. These adjustments are described in detail below. This is particularly useful for repeat or future transmission.

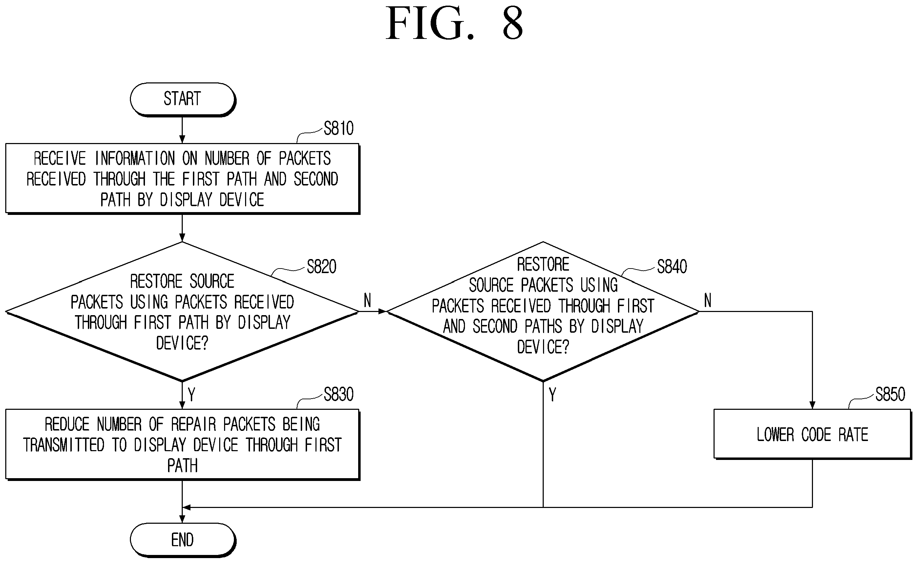

FIG. 8 is a flowchart illustrating an operation performed by an electronic device using information received from a display device according to an embodiment of the disclosure.

**In** operation S810, the processor 150 of the electronic device 100 may receive information from the display device 200 including the number of packets received by the display device 200 through the first path N1 and the number of packets received by the display device 200 through the second path N2. The electronic device 100 may receive this information through the second communication interface 120, although this disclosure is not limited thereto.

The processor 150 may identify whether the display device 200 restored the source packets, or whether the source packets are restorable, using the received information. For example, the processor 150 may identify whether the source packets were restored using the packets received by the display device 200 through the first path only, whether the source packets were restored using the packets received by the display device 200 through both the first and second paths, or whether the source packets were not restored by the display device 200.

The processor 150 may identify whether the display device 200 restored the source packets using the packets received by the display device 200 through the first path only.

For example, the processor 150 may identify, based on the number of packets received by the display device 200 through the first path being greater than the number of source packets (e.g., N1 > K), that the display device 200 restored the source packets using the packets received through the first path.

In operations S820 and S830, when the processor 150 identifies that the display device 200 has restored the source packets using the packets received through the first path only (S820-Y), the processor 150 may reduce a number of first repair packets to be transmitted to the display device 200 through the first path (S830).

For example, the electronic device 100 may transmit M number of repair packets from among the K/R-K repair packets to the display device 200 through the first path. Then, if the electronic device 100 identifies that the display device 200 has restored the source packets using the packets received through the first path only, the electronic device 100 may reduce the number of repair packets to be transmitted to the display device 200 through the first path to M-α number of repair packets. At this time, α may be a natural number. With respect to α, fewer than M repair packets may be transmitted to the display device 200. The electronic device 100 may select the M-α repair packets from among the K/R-K repair packets, and transmit the K number of source packets and the M-α number of repair packets to the display device 200 through the first path. This selection of the M-α repair packets from among the K/R-K repair packets may be random. Further, the electronic device 100 may transmit a K/R-(K+M-α) number of repair packets from among the K/R-K repair packets to the display device 200 through the second path.

As described above, the display device 200 may not need to use the packets received through the second path, and can restore the source packets using only the packets received through the first path. The above may indicate that not many packets are lost due to a channel state of the first path being good, and that a sufficient number of packets were received in the display device 200 to restore the source packets via only the first path. Accordingly, the electronic device 100 may lower power consumption by reducing the number of packets transmitted to the display device 200 through the first path when it is identified that the display device 200 succeeded in restoring the source packets using only the packets received through the first path.

The processor 150 may identify, based on the number of packets received by the display device 200 through the first path being less than or equal to the number of source packets (e.g., N1≤K), that the display device 200 has not been able to restore the source packets using the packets received through the first path only. In this case, the processor 150 may identify whether the source packets have been restored by additionally using the packets that the display device 200 received through the second path.

For example, the processor 150 may identify, based on the number of packets received by the display device 200 through the first path being less than or equal to the number of source packets (e.g., N1≤K), and the sum total of the number of packets received through the first path and the number of packets received through the second path by the display device 200 being greater than the number of source packets (e.g., N1+N2 > K), that the display device 200 has restored the source packets using the packets received through the first path and the second path. In this case, the processor 150 may maintain, i.e., may not adjust, the code rate and the number of repair packets transmitted to the display device 200 through the first path.

The processor 150 may identify, based on the sum total of the number of packets received through the first path and the number of packets received through the second path by the display device 200 being less than or equal to the number of source packets (e.g., N1+N2≤K), that the display device 200 has not been able to restore the source packets using the packets received through the first path and the second path.

In operations S820, S840, and S850, the processor 150 may lower the code rate of the FEC code (S850) based on the display device 200 being identified as not having been able to restore the source packets using the packets received through the first path only (S820-N), and the display device 200 being identified as not having been able to restore the source packets using the packets received through the first path and the second path (S840-N).

For example, the electronic device 100 may generate the K/R-K repair packets by encoding the K number of source packets using a FEC code having a code rate of R. Then, if the electronic device 100 identifies that the display device 200 has not been able to restore the source packets using the packets received through the first path and the second path, the electronic device 100 may lower the code rate to K/(K/R+β). As above, β may be the number of packets requested for retransmission from the display device 200.

If the code rate is lowered from R to K/(K/R+β), a β number of repair packets may be further generated. That is, the electronic device 100 may generate a K/R+β-K number of repair packets by encoding the K number of source packets using a FEC code having a code rate of K/(K/R+β). The electronic device 100 may select the M number of repair packets from among the K/R+β-K number of repair packets, and transmit the K number of source packets and the M number of repair packets to the display device 200 through the first path. This selection may be random. Then, the electronic device 100 may transmit a K/R+β-(K+M) number of repair packets from among the K/R+β-K number of repair packets to the display device 200 through the second path.

That is, if many packets are lost due to the channel states of the first path and/or the second path not being good, the display device 200 cannot restore the source packets using the received packets. Accordingly, the electronic device 100 may lower the code rate, generate further repair packets by using the requested number for retransmission, and transmit the further repair packets to the display device 200. Accordingly, a deterioration in image and audio quality that can occur due to the display device 200 failing in the restoring of the source packets may be prevented.

As described above, the electronic device 100 may adaptively change the code rate and the number of repair packets transmitted through the first path according to whether the display device 200 was previously able to restore the source packets.

Additionally or alternatively, when the electronic device 100 identified that the display device 200 has not been able to restore the source packets using the packets received through the first path and the second path, the electronic device 100 may transmit the source packets and the first repair packets previously transmitted to the display device 200 through the first path to the display device 200 through the second path, and transmit the second repair packets previously transmitted to the display device 200 through the second path to the display device 200 through the first path.

For example, when the processor 150 identifies that the display device 200 has not been able to restore the source packets using the packets received through the first path and the second path, the processor 150 may identify a network state of the first path based on the number of packets received by the display device 200 through the first path, and identify a network state of the second path based on the number of packets received by the display device 200 through the second path.

The network may include a wireless network. The network state may be substituted with expressions such as a network quality, a network situation, a channel state, a channel quality, a channel situation, and the like.

The network state may be determined based on the packet loss rate. The packet loss rate is the number of lost packets out of the total number of transmitted packets, and can be represented by a fraction.

For example, the processor 150 may identify the number of packets lost on the first path based on the number of packets transmitted to the display device 200 through the first path and the number of packets received by the display device 200 through the first path. Then, the processor 150 may identify the packet loss rate of the first path (i.e., p) based on the number of packets transmitted to the display device 200 through the first path and the number of packets lost on the first path. For example, if the number of packets transmitted to the display device 200 through the first path is K+M and the number of packets lost on the first path is (K+M)-N1, the packet loss rate is ((K+M)-N1)/(K+M).

In addition, the processor 150 may identify the number of packets lost on the second path based on the number of packets transmitted to the display device 200 through the second path and the number of packets received by the display device 200 through the second path. Then, the processor 150 may identify the packet loss rate of the second path (i.e., q) based on the number of packets transmitted to the display device 200 through the second path and the number of packets lost on the second path. For example, if the number of packets transmitted to the display device 200 through the second path is K/R-(K+M) and the number of packets lost on the second path is K/R-(K+M)-N2, the packet loss rate is (K/R-(K+M)-N2)/(K/R-(K+M)).

In this case, the processor 150 may identify that the network state of the path is good if the associated packet loss rate is less than a threshold value (i.e., a preset threshold value), and identify that the network state of the path is not good if the packet loss rate is greater than or equal to the threshold value.

Meanwhile, in the above-described example, the network state has been described as being measured based on the packet loss rate, but is not limited thereto. For example, the network state between the electronic device 100 and the display device 200 may be determined by various indicators such as, for example, and without limitation, bandwidth, time delay, jitter (i.e., the variation in the time delay), and the like. As above, the processor 150 may identify that the network state of the path is good if the associated indicator is greater than (e.g., for bandwidth) or less than (e.g., for time delay and jitter) a threshold value (i.e., a preset threshold value). As above, the processor 150 may identify that the network state of the path is not good if the associated indicator is respectively less than or equal to, or greater than or equal to the threshold value. In effect, the network state of the path is good if it is above a threshold network state, and is not good if it is below a threshold network state.

In the disclosure, the network state not being good may include a throughput of a channel being low for reasons such as interference to a channel and the like. Accordingly, if the network state is not good, the packet loss rate is increased due to packet loss occurring.

If it is it identified that the network state of the first path is not good and the network state of the second path is good, the processor 150 may transmit the second repair packets to the display device 200 through the second communication interface 120 (i.e., through the first path), and transmit the source packets and the first repair packets to the display device 200 through the access point 400 using the third communication interface 130 (i.e., through the second path). That is, the processor 150 may switch the path through which the packets are transmitted with each other.

If the network state of the first path is not good and more packets are transmitted through the first path than through the second path, then more packets may be lost from the first path (than would be lost from the second path) and thereby, the display device 200 may not be able to restore the source packets even when the packets received through the second path are additionally used. Accordingly, the electronic device 100 may transmit, based on the network state of the first path not being good, the source packets and the first repair packets to the display device 200 through the second path, and transmit the second repair packets to the display device 200 through the first path. Accordingly, deterioration of image and audio quality, which may occur due to the display device 200 failing to restore the source packets, may be reduced or prevented.

Meanwhile, the various embodiments described above may be implemented in a recordable medium which is readable by computer or a device similar to the computer using software, hardware, or the combination thereof. In some cases, the embodiments described herein may be implemented by the processor itself. According to a software implementation, embodiments such as the procedures and functions described herein may be implemented with separate software modules. Each of the software modules may perform one or more of the functions and operations described herein.

Meanwhile, computer instructions for performing processing operations in the electronic device according to the various embodiments described above may be stored in a non-transitory computer-readable medium. The computer instructions stored in this non-transitory computer-readable medium may cause a specific device to perform a processing operation in the electronic device 100 according to the above-described various embodiments when executed by a processor of the specific device.

The non-transitory computer readable medium may refer to a medium that stores data semi-permanently rather than storing data for a very short time, such as a register, a cache, a memory, or the like, and is readable by a device. Specific examples of the non-transitory computer readable medium may include, for example, and without limitation, a compact disc (CD), a digital versatile disc (DVD), a hard disc, a Blu-ray disc, a USB, a memory card, a ROM, and the like.

While the disclosure has been illustrated and described with reference to various example embodiments thereof, it will be understood that the various example embodiments are intended to be illustrative, not limiting.

## Claims

1. An electronic device, comprising:
a first communication interface (110);
a second communication interface (120) configured to communicate with a display device (200);
a third communication interface (130) configured to communicate with the display device (200) through an access point (400) which communicates with the display device (200); and
at least one processor (150) configured to:
receive data from an external device (300) through the first communication interface (110),
generate repair packets by encoding source packets which comprise the data using a forward error correction, FEC, code,
transmit the source packets and first repair packets selected from among the repair packets to the display device through the second communication interface (120), and
transmit second repair packets excluding the first repair packets from among the repair packets to the display device (200) through the access point (400) using the third communication interface (130).

2. The electronic device of claim 1, wherein the at least one processor (150) is further configured to:
transmit, using the second communication interface (120), the source packets and the first repair packets to the display device (200) through a first path which is a direct communication path between the electronic device (100) and the display device (200) that does not go through the access point (400), and
transmit, using the third communication interface (130), the second repair packets to the display device (200) through a second path which is a communication path between the electronic device and the display device which goes through the access point (400).

3. The electronic device of claim 2, wherein the at least one processor (150) is further configured to reduce a number of the first repair packets to be transmitted to the display device (200) through the first path, based on the display device (200) being identified as having restored the source packets using packets received through the first path.

4. The electronic device of claim 2 or claim 3, wherein the at least one processor (150) is further configured to lower a code rate of the FEC code, based on the display device (200) being identified as not having been able to restore the source packets using packets received through the first path and the second path.

5. The electronic device of any one of claims 2 to 4, wherein the at least one processor (150) is further configured to:
receive information from the display device (200) on a number of packets received by the display device (200) through the first path and the number of packets received by the display device through the second path, and
identify whether the display device (200) restored the source packets based on the received information.

6. The electronic device of claim 5, wherein the at least one processor (150) is further configured to identify that the display device (200) has restored the source packets using packets received through the first path only, based on a number of packets received by the display device (200) through the first path being greater than a number of source packets.

7. The electronic device of claims 5 or 6, wherein the at least one processor (150) is further configured to identify that the display device (200) has not been able to restore the source packets using packets received through the first path and the second path, based on a sum total of a number of packets received by the display device (200) through the first path and a number of packets received by the display device (200) through the second path being less than or equal to the number of source packets.

8. The electronic device of any one of claims 5 to 7, wherein the at least one processor (150) is further configured to:
identify a network state of the first path based on a number of packets received by the display device through the first path, based on the display device (200) being identified as not having been able to restore the source packets using packets received through the first path and the second path, and
identify a network state of the second path based on a number of packets received by the display device (200) through the second path, and
transmit the second repair packets to the display device (200) through the second communication interface, based on identifying the that the network state of the first path is above a threshold network state, and
transmit the source packets and the first repair packets to the display device (200) through the access point using the third communication interface (130).

9. The electronic device of any preceding claim, wherein the external device is an electronic device or a server, and is capable of transmitting image and audio data.

10. A method for transmitting data by an electronic device (100), the method comprising:
receiving (S310) data from an external device;
generating (S320) repair packets by encoding source packets which comprise the data using a forward error correction, FEC, code;
directly transmitting (S330) the source packets and first repair packets selected from among the repair packets to a display device; and
transmitting (S340) second repair packets excluding the first repair packets from among the repair packets to the display device through an access point.

11. The method of claim 10, wherein:
the directly transmitting (S330) comprises transmitting the source packets and the first repair packets to the display device through a first path which is a direct communication path between the electronic device and the display device that does not go through the access point, and
the transmitting (S340) through the access point comprises transmitting the second repair packets to the display device through a second path which is a communication path between the electronic device and the display device which goes through the access point.

12. The method of claim **11,** further comprising reducing (S830) a number of the first repair packets to be transmitted to the display device through the first path, based on the display device being identified as having restored the source packets using packets received through the first path.

13. The method of claims 11 or 12, further comprising lowering (S850) a code rate of the FEC code, based on the display device being identified as not having been able to restore the source packets using packets received through the first path and the second path.

14. The method of any one of claims 11 to 13, further comprising:
receiving (S810) information on a number of packets received by the display device through the first path and a number of packets received by the display device through the second path from the display device; and
identifying (S820) whether the display device has restored the source packets based on the received information.

15. The method of claim 14, wherein the identifying (S820) that the display device has restored the source packets using packets received through the first path is based on a number of packets received by the display device through the first path being greater than a number of source packets.
